# EUROPEAN PATENT APPLICATION

(11) **EP 1 283 193 A2**
(43) Date of publication of application: **12.02.2003**
(21) Application number: 02255527.0
(22) Date of filing: 07.08.2002
(51) Int. Cl.: C02F 1/00, C02F 103/14, C08J 11/00, B05B 15/12

(54) **Method for recycling aqueous intermediate-coating paint**

(30) Priority: 08.08.2001 JP 2001240253
(71) Applicant: Nippon Paint Co., Ltd., Osaka-shi Osaka-fu (JP)
(72) Inventor: Uenoyama, Kazuo, Osaka-shi, Osaka-fu (JP)
(74) Representative: Perry, Robert Edward

(57) **Abstract**

Disclosed is that one coating system of aqueous intermediate-coating paint (20) can employ a plurality of colors of aqueous intermediate-coating paints and easily recycle them without color mixing problems. The method comprises spray-coating an article (50) with aqueous paint in a coating booth, recovering over-spray paint that has not applied on the article in a booth circulating water bath (5), carrying out spray-coating for a certain period of time followed by sending the content of the booth circulating water bath to a concentration tank (7) after finishing a certain term for coating, separating the content with a ultrafiltration device (9) into a concentrated paint having a desired concentration and a filtrate, storing the concentrated paint in a recovering tank (12) for re-using on desire, the spray-coating being conducted using at least two different achromatic color intermediate-coating paints having different lightness, the over-spray paint being recovered mixing together the different achromatic color intermediate-coating paints and subjected to concentration to form a concentrated paint, and the concentrated paint being either re-used as one of achromatic color intermediate-coating paints as it is, or being subjected to lightness adjustment to lower lightness and re-used as one of achromatic color intermediate-coating paints having lower lightness.

## Description

### FIELD OF THE INVENTION

The present invention relates to a method for recycling aqueous intermediate-coating paint in a coating line of car bodies in which at least two-color aqueous intermediate-coating paints are used for coating, and over-spray paint that has not applied is recovered for re-using.

### BACKGROUND OF THE INVENTION

Aqueous paint, of which solvent is water, has been recently widely used for coating industrial products, such as car bodies, electric home appliances and the like, in order to prevent air pollution and to ensure environmental protection. A recycle method of aqueous paint has been already proposed, wherein aqueous paint that has not applied on an article to be coated, i.e. over-spray paint, is recovered with aqueous medium, especially water, and its composition is adjusted and then re-used for coating. Recycle method of aqueous paint significantly reduces paint waste and saves natural resources.

When coating car bodies, car bodies are coated with an under coating layer for preventing corrosion and then coated with an intermediate-coating layer for concealing the under coating layer and smoothening coating surface, followed by forming thereon an over coating layer for imparting decorative surface. The intermediate-coating layer and over coating layer are now formed from organic solvent-borne paint in view of coating operability, but a conversion of organic solvent-borne paint to water-borne paint that is easily recycled has been considered and tried for environmental protection. For the time being, an conversion to aqueous intermediate-coating paint has now been studied because it usually has achromatic color.

The intermediate-coating is generally selected its color from achromatic color of white to black to match with color of over coating. If the intermediate-coating is kept using one color, the over-spray paint that has not applied on an article is recovered and re-used with ease. However, in case where the intermediate-coating is made plural colors for matching with the over coating layer as mentioned above, the method of recycling the intermediate paint is not easy and become complicated. Once one color of intermediate paint finishes coating, the coating system should be completely washed up and the previous color paint should be completely removed from the coating system for avoiding color mixing, before next color of intermediate paint starts coating. It is not realistic that each color of intermediate paint is coated by one coating system, because the more the number of color the more the number of coating system.

### OBJECT OF THE INVENTION

It is therefore desired that one coating system of aqueous intermediate-coating paint can employ a plurality of colors of aqueous intermediate-coating paints and easily recycle them without color mixing problems.

### SUMMARY OF THE INVENTION

The inventors have noted that all intermediate-coating paints for coating car bodies are achromatic with different lightness, i.e. color mixing white pigment with black pigment. The inventors have also found that a plurality of aqueous intermediate-coating paints are recovered together as overspray paint and effectively and easily re-used in the coating system.

Accordingly, the present invention is to provide a method for recycling aqueous intermediate-coating paint, comprising spray-coating an article with aqueous paint in a coating booth, recovering over-spray paint that has not applied on the article in a booth circulating water bath, carrying out spray-coating for a certain period of time followed by sending the content of the booth circulating water bath to a concentration tank after finishing a certain term for coating, separating the content with a ultrafiltration device into a concentrated paint having a desired concentration and a filtrate, storing the concentrated paint in a recovering tank for re-using on desire, wherein
the spray-coating is conducted using at least two different achromatic color intermediate-coating paints having different lightness,
the over-spray paint is recovered mixing together the different achromatic color intermediate-coating paints and subjected to concentration to form a concentrated paint, and
the concentrated paint is either re-used as one of achromatic color intermediate-coating paints as it is, or is subjected to lightness adjustment to lower lightness and re-used as one of achromatic color intermediate-coating paints having lower lightness.

### BRIEF DESCRIPTION OF THE DRAWINGS

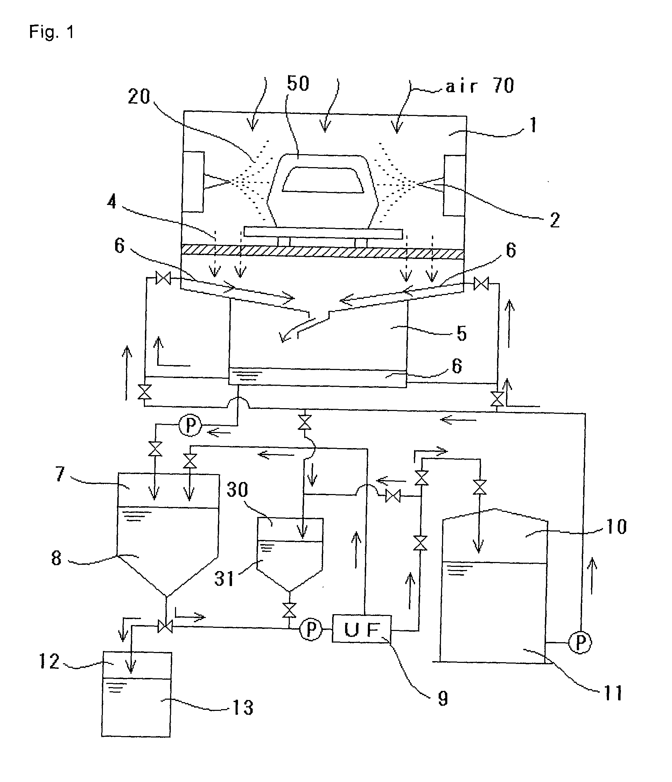

Fig. 1 shows a schematic view of flow of liquid in the recycle system for intermediate aqueous coating paint of the present invention.

### DETAILED DESCRIPTION OF THE INVENTION

The present invention is related to a method for recycling achromatic aqueous intermediate-coating paint employed for intermediate-coating car bodies.

The method can be conducted by a recycle system of an aqueous intermediate-coating paint, as shown in Fig. 1. In Fig. 1, aqueous intermediate-coating paint 20 is sprayed from a coating gun 2 and spray-coated onto a car body 50 as an article to be coated. In this operation, overspary paint 4 that has not applied on the car body 50 is flown down by air flow 70 and collected by booth circulating water 6, followed by sending to a booth circulating water bath 5. The booth circulating water 6 is pumped-up and used repeatedly. After coating for a certain period of time, at least one portion (preferably all) of the content in the booth circulating water bath 5 is sent to a concentration tank 7. The content 8 in the concentration tank 7 is sent to a ultrafiltrating apparatus 9 and is subjected to ultrafiltration to form a filtrate and a concentrated paint. The filtrate is sent to a filtrate tank 10 and stored as filtrate 11 and the concentrated paint is returned to the concentration tank 7 to repeat concentration by the ultrafiltrating apparatus 9 until a desired concentration is obtained. The concentrated paint having a desired concentration is then sent to a recover paint tank 12 as a concentrated paint 13. The concentrated paint 13 is taken out when necessary and subjected to composition adjustment, followed by sending the coating gun 2 for re-using as intermediate-coating paint. The filtrate 11 is transferred either to the booth circulating water bath 5 to use as rinsing water for the coating booth 1 or as booth circulating water 6, or to a rinsing tank 30 to rinse the ultrafiltrating apparatus 9 as rinsing water 31 after concentration and separation.

The coating system of the present invention employs at least two sorts of achromatic color aqueous intermediate-coating paint having different lightness. The intermediate-coating paint is formed from a combination of white pigment and black pigment and has gray color somewhere between white and black.

The aqueous intermediate-coating paint will be explained hereinafter in details.

According to the present invention, an achromatic aqueous intermediate-coating paint is spray-coated in the coating booth 1, but the achromatic aqueous intermediate-coating paint can be selected from two or more sorts of those having different lightness and coated in turn. Accordingly, a plural of paints are coated in one coating system that have been known and additional cost for establishing additional equipments does not need.

According to the present invention, the over-spray paint is collected together by the aid of booth circulating water without caring color (lightness) difference between the sprayed aqueous intermediate-coating paints, and recovered in the booth circulating water bath 5, followed by storing it. The content of the booth circulating water bath 5 is subjected to the ultrafiltrating apparatus 9 to concentrate the paint, thus obtaining concentrated paint. In this system, there is no need of operation for changing color, such as cleaning up the coating system. This system also reduces a size of coating lines because the over-spray paint is recovered and stored in one tank.

The concentrated paint is then either re-used as it is or subjected to lightness control to re-use, so that paint would not be wasted and natural resources are saved significantly.

The lightness control of the concentrated paint is conducted by changing pigment ratio in the paint, for example. In case where an achromatic paint is merely formed from a combination of white and black pigments and no other components are contained, the lightness control is simply conducted by adjusting a weight ratio of white and black pigments to desired one. However, things are not so simple in case where paint contains additional components, such as loading pigment and other additives other than the white and black pigments. It is preferred that all compositional ratios be adjusted to keep paint stability and other properties. Since the intermediate-coating paint generally contains such additional components, mere addition of white or black pigment is not sufficient for re-using the paint.

The present invention, thus, prepares an adjusting paint for adjusting lightness of the concentrated paint. The adjusting paint preferably has a composition that a composition of a concentrated paint is subtracted from that of a paint to be re-used. Thus, the adjusting paint is added to the concentrated paint to obtain a re-usable paint having an adjusted composition.

When white aqueous paint and gray aqueous paint are chosen as an example, the concentrated paint that is recovered from the two paints has to contain white pigment and black pigment. In order to adjust the lightness of the concentrated paint, a compositional ratio of white and black pigments can be changed, but the content of black pigment can not be made zero. If the concentrated paint contains very small amount of black pigment, to make the lightness of the concentrated paint high is very difficult. This is because the presence of black pigment makes great effect on its color or lightness. Making lightness higher is possible if large amount of white pigment is formulated, but it sometimes develops defects because of the presence of too much white pigment.

In order to effectively utilize the concentrated paint according to the present invention, the lightness of the concentrated paint is made lower or darker by adding an adjusting paint.

For example, assuming that two gray aqueous intermediate-coating paints (1) and (2) are used and a recovered paint is obtained and re-used, an explanation is conducted using the following table:

**Table 1**

| | Aqueous intermediate-coating paint (1) | Aqueous intermediate-coating paint (2) | Concentrated paint | Adjusting paint | After adjustment |
|---|---|---|---|---|---|
| Lightness | A | B | C | - | B |

When each lightness has the relation of A < C < B, the lightness of the concentrated paint is adjusted to a lower lightness of B by adding an adjusting paint. Accordingly, the adjusting paint has to have a composition obtained by subtracting the composition of the concentrated paint from that of the aqueous intermediate-coating paint (1).

The adjusting paint can be prepared by art-known methods. If a composition of a re-using paint is determined, the adjusting paint can be prepared by a calculation from the lightness of each paint and the amount of paint to be used and carried out. The adjusting paint can automatically be prepared by so-called Computer Color Matching system (CCM system).

According to the present invention, it is preferred that the concentrated paint is adjusted by adding an adjusting paint to obtain one of aqueous intermediate-coating paints having a lower lightness, which is then re-used.

According to the present invention, the lightness of the concentrated paint can also be controlled by operating amounts of the aqueous intermediate-coating paints. For example, if utilizing frequency, such as coating period, number of car bodies and so on of each intermediate-coating paint is controlled, the final concentrated paint can be controlled to the composition as same as one of the intermediate-coating paints. Additionally, if the intermediate-coating paint has a determined composition and a determined recovery ratio, its utilizing frequency is controlled such that the concentrated paint matches to one of the intermediate-coating paints.

### Aqueous Intermediate-coating Paint Composition

The aqueous intermediate-coating paint composition employed in the present invention has properties sufficient for intermediate-coatings of cars, for example in workability and film properties (e.g. pin-hole, recess, sagging and the like). The intermediate-coating paint composition has achromatic color between white and black. The paint composition can be thermosetting water-borne paint that comprises polyester resin, curing agent and white and/or black pigment. The paint composition may further contain additives that are generally used for paint.

The polyester resin used in the paint is obtained by reacting polyhydric carboxylic acid and polyhydric alcohol. As the reacting component, small amount of monocarboxylic acid, hydroxycarboxylic acid, lactone and the like can be employed. The polyester resin can also be alkyd resin known to the art.

The polyhydric carboxylic acid includes aromatic polyhydric carboxylic acid, such as phthalic anhydride, iso-phthalic acid, tere-phthalic acid, trimellitic acid, tetrabromophthalic anhydride, tetrachlorophthalic anhydride and pyromellitic acid; hydrogenated phthalic acid, such as hexahydrophthalic acid and tetrahydrophthalic acid; aliphatic polyhydric carboxylic acid, such as 1,4- or 1,3-cyclohexane dicarboxylic acid, maleic anhydride, succinic anhydride, adipic acid, sebacic acid and azelaic acid; hydroxycarbonic acid, such as 4-hydroxybenzoic acid, hydroxypivalic acid and 12-hydroxystearic acid; and the like. Examples of monocarboxylic acids are benzoic acid, t-butylbenzoic acid and the like. Too much amount of polyhydric acid in the polyester resin increases resin viscosity when water-solubilizing or dispersing.

The polyhydric alcohol includes diols or more-hydric polyols. The polyhydric alcohol can be polymeric polyols, such as hydroxyl-terminated polyalkadiene diol having a molecular weight of from 1,000 to 4,000, more preferably 1,500 to 3,000 derived from conjugated alkadiene oligomer or polymer having a polymerization degree of 5 to 50, or a hydrogenated one thereof. They are used alone or in combination. Among them, preferred are 1,4-polyisoprene diol, 1,4-, or 1,2-polybutadiene diol and hydrogenated one thereof. Too much amount of polyhydric alcohol in the polyester resin may decrease water-dispersibility and reduce film hardness.

The polyester resin may further contain monoexpoxide compound, such as Cardura E (available from Shell Chemical Co.); or lactones, such as β-propiolactone, dimethylpropiolactone, butyrolactone, γ-valerolactone, ε-caprolactone, γ-caprolactone, γ-caprilolactone, crotolactone, δ-valerolactone,δ-caprolactone and the like. Especially, the lactones are ring-opened and added to polyester chains formed from polyhydric carboxylic acid and polyhydric alcohol to form additional polyester chains. The lactones help enhancing tipping resistance of the resulting coatings. These compounds may be contained in an amount of 3 to 30 % by weight, preferably 5 to 20 % by weight, more preferably 7 to 15 % by weight, based on total weight of reactants for polyester.

The polyester resin can also be alkyd resin that may contain drying oil, semi-drying oil or fatty acid thereof. The drying oil, semi-drying oil or fatty acid thereof may be fatty acid having not less than 6 carbon atoms or fat and oil containing them and contains in an amount of upto 30 % by weight, preferably upto 25 % by weight, particularly 10 to 20 % by weight based on total weight of reactants. Examples of the fat and oils are castor oil, linseed oil, tung oil, dehydrated castor oil, safflower oil, soybean oil, tall oil, coconut oil, palm oil and fatty acid thereof. Preferred are coconut oil and palm oil.

The polyester resin may be prepared by reacting or concentrating the above mentioned reactants by conventional methods, such as at a temperature of 150 to 250 °C for 4 to 10 hours in nitrogen atmosphere. The reaction may be catalyzed with art-known catalyst.

It is preferred that the polyester resin has an acid value of 5 to 150 mg KOH/g (solid), preferably 10 to 100 mg KOH/g (solid), a hydroxyl value of 30 to 250 mg KOH/g (solid), preferably 50 to 150 mg KOH/g (solid) and a weight average molecular weight of 10,000 to 200,000, preferably 25,000 to 160,000.

The aqueous intermediate-coating composition may further contain carboxyl-containing resin, such as acrylic resin or polyester resin having carboxylic acid group, in addition to the above mentioned polyester resin. The resin may be in the form of powder having a particle size of 3 to 60 µm, preferably 5 to 25 µm. The resin powder preferably has an acid value of 15 to 300 mg KOH/g (solid), particularly 30 to 100 mg KOH/g (solid). The addition of the resin powder makes the paint composition high solid and increases limiting thickness of sagging because of structural viscosity. The resin powder may be contained in a weight ratio of resin powder: polyester resin of 2 : 98 to 40 : 60, preferably 5 : 95 to 30 : 70, particularly 10 : 90 to 25 to 75.

The aqueous intermediate-coating paint composition contains a curing agent that reacts both the polyester resin and optional resin powder. Examples of the curing agents are epoxy resin, melamine resin, triglycidyl isocyanulate, dicyandiamide and the like. When the polyester resin is alkyd resin, the curing agent can be a drier, such as cobalt naphthenate, lead naphthenate, zinc naphthenate and the like. Preferred curing agent is melamine resin. An amount of the curing agent can be varied based on sorts of curing agent. In case where the curing agent is melamine resin, a weight ratio of melamine resin : the polyester resin may be within the range of 6 : 4 to 8 : 2 solid.

The polyester resin is dissolved or dispersed in an aqueous medium containing a base in an amount of 0.3 to 1.2 equivalent, preferably 0.5 to 1.0 equivalent based on the acid value of the polyester resin to form an aqueous varnish. A portion of the aqueous varnish was mixed with pigment to form a pigment paste. The pigment paste is then mixed with the curing agent and the remaining of the aqueous varnish to obtain an aqueous intermediate-coating paint composition.

The aqueous medium for forming the aqueous varnish is generally ion-exchanged water and if necessary a water-miscible organic solvent. Examples of the water-miscible organic solvent are diethyleneglycol monoethyl ether, diethyleneglycol monobutyl ether, propyleneglycol monomethyl ether, propyleneglycol monoethyl ether, ethyleneglycol monomethyl ether, methanol, ethanol, isopropyl alcohol, n-butyl alcohol, sec-butyl alcohol, t-butyl alcohol, dimethylformaminde, N-methylpyrrolidone and the like. Examples of the bases are inorganic base, such as hydroxide of alkaline metal and ammonia; and organic base, such as methylamine, dimethylamine, trimethylamine, ethylamine, diethylamine, triethylamine, isopropylamine, diisopropylamine, diethylenetriamine, triethylenetetramine, monoethanolamine, diethanolamine, 2-amino-2-methylpropanol, morpholine, N-methylmorpholine, N-ethylmorpholine, piperazine, dimethylethanolamine, diethylethanolamine, dimethyldodecylamine and the like. Preferred bases are triethylamine, dimethylethanolamine and diethylethanolamine.

The aqueous intermediate-coating paint composition of the present invention may contain conventional pigment, for example color pigment, such as titanium dioxide, lead white, zinc carbonate, zinc sulfate, graphite, or carbon black; corrosion resistant pigment; loading pigment, such as calcium carbonate, barium sulfate, silicate type aluminum hydrate; and the like. Preferred pigment for the present invention is a combination of titanium dioxide as white pigment and carbon black as black pigment in a desired weight ratio. The pigment can be contained in the composition in a weight ratio of pigment / solid content of the composition of 0.01 / 1 to 1 / 1, preferably 0.03 / 1 to 0.9 / 1.

The aqueous intermediate-coating paint composition of the present invention has a desired lightness of from white derived from titanium dioxide to black derived from carbon black.

### EXAMPLES

The present invention will be explained using Fig. 1 by Examples which, however, are not to be construed as limiting to their details.

### Example 1

Four aqueous intermediate-coating paints A, B, C and D had the following composition and formulation shown in Table 2. The paints A, B, C and D have a lightness at a thickness (t) of a, b, c and d, respectively, with a relation of a > b > c > d.

**Table 2**

| | Aqueous intermediate-coating paint (Part by weight) | | | |
|---|---|---|---|---|
| | A | B | C | D |
| White pigment: titanium dioxide | 18.09 | 18.01 | 17.49 | 9.4 |
| Black pigment: carbon black | 0 | 0.08 | 0.6 | 2.3 |
| Filler pigment: | | | | |
| calcium carbonate | 0.76 | 0.76 | 0.76 | 0.7 |
| barium sulfate | 8.55 | 8.55 | 8.55 | 4.0 |
| Polyester resin (acid value 40, hydroxyl value 80, weight average molecular weight 12,000) | 39.7 | 39.7 | 39.7 | 43.6 |
| Total solid content | 67.1 | 67.1 | 67.1 | 60.0 |
| PWC*¹ (%) | 40.8 | 40.8 | 40.8 | 27.3 |
| Lightness at a thickness of t | a | b | c | d |

| | | | | |
|---|---|---|---|---|
| *1 PWC (%) = (Total weight of pigment / Total weight of pigment and resin solid) X 100 | | | | |

Each intermediate-coating paint was coated for one month according the coating condition as shown in the following Table 3, using the recycle system shown in Fig. 1. The over-spray paint was recovered to obtain a concentrated paint having the composition indicating in Table 4. Recover ratio of paint was 30 % with each paint.

**Table 3**

| | Aqueous intermediate-coating paint | | | |
|---|---|---|---|---|
| | A | B | C | D |
| Used amount (Kg) | 4000 | 5,250 | 1,700 | 5,000 |
| Used amount ratio (%) of each paint to total used paint amount | 25 | 83 | 11 | 31 |
| Recovered solid amount (Kg) | 805 | 1,057 | 342 | 900 |

**Table 4**

| | Concentrate d paint | Adjusting paint |
|---|---|---|
| White pigment: titanium dioxide | 15.27 | 1.46 |
| Black pigment: carbon black | 0.81 | 3.28 |
| Filler pigment: calcium carbonate barium sulfate | 0.74 7.12 | 0.51 0.00 |
| Polyester resin (acid value 40, hydroxyl value 80, weight average molecular weight 12,000) | 40.9 | 36.71 |
| Total solid content | 64.84 | 41.96 |
| PWC*¹ (%) | 36.9 | 12.5 |
| Lightness at a thickness of t | e | - |

The concentrated paint had a lightness of e at a thickness of t and the lightness had the relation of a > b > c > e > d.

An adjusting paint was prepared from the composition shown in Table 4 for re-using the concentrated paint as the aqueous intermediate-coating paint D. The composition and formulation of the adjusting paint were calculated by subtracting the amounts of the concentrated paint from the amounts of the paint D. Then, 1,179 Kg of the adjusting paint was mixed with 1,820 Kg of the concentrated paint to obtain 3,000 Kg of a paint P having the same lightness with the paint D.

The obtained paint P was coated using the coating system shown in Fig. 1 and the coated article was dried at 60 °C for 20 minutes. The resulting coating was evaluated in coating appearance, pencil hardness and water resistance as follow. For comparison, the paint D was coated with the same condition as the paint P and the resulting coating was evaluated as same as paint P. The results of the evaluation are shown in Table 5.

(1) Coating appearance : A surface of the coating was observed by eyes. No surface defect shows ○ and the other shows X.

(2) Pencil hardness : The dried coating was tested according to JIS S 6006, using a test pencil, to obtain a hardness of coating.

(3) Water resistance : The coated article was immersed in ion-exchanged water at 40 °C for 240 hours and then visually evaluated. The criteria is as follow.
○ --- No defects
Δ --- Blister or corrosion is a little developed.
X --- Blister or corrosion is severely developed.

**Table 5**

| Test results | Paint P | Paint D |
|---|---|---|
| (1) Coating appearance | ○ | ○ |
| (2) Pencil hardness | H | H |
| (3) Water resistance | ○ | ○ |

As is apparent from the above results, the paint P forms coated film having the same physical properties as the paint D.

According to the present invention, plural of paints are coated using one coating system that is known to the art and no additional equipments are necessary. Color changing operations, such as washing the system, are not necessary, because all paints are recovered in one booth as long as the paints have achromatic color. Over-sprayed paint is all recovered in one paint booth and the system of coating can be down-sized.

In addition, the recovered and concentrated paint can be re-used as an achromatic color aqueous intermediate-coating paint having lower lightness, preferably by adjusting the lightness by adding an adjusting paint separately prepared. Or the recovered and concentrated paint can be re-used as it is, in case where the concentrated paint has as same lightness as paint to be coated. Accordingly, the system hardly develops paint waste and effectively employs natural resources.

## Claims

1. A method for recycling aqueous intermediate-coating paint, comprising spray-coating an article with aqueous paint in a coating booth, recovering over-spray paint that has not applied on the article in a booth circulating water bath, carrying out spray-coating for a certain period of time followed by sending the content of the booth circulating water bath to a concentration tank after finishing a certain term for coating, separating the content with a ultrafiltration device into a concentrated paint having a desired concentration and a filtrate, storing the concentrated paint in a recovering tank for re-using on desire, wherein
the spray-coating is conducted using at least two different achromatic color intermediate-coating paints having different lightness,
the over-spray paint is recovered mixing together the different achromatic color intermediate-coating paints and subjected to concentration to form a concentrated paint, and
the concentrated paint is either re-used as one of achromatic color intermediate-coating paints as it is, or is subjected to lightness adjustment to lower lightness and re-used as one of achromatic color intermediate-coating paints having lower lightness.

2. The method for recycling aqueous intermediate-coating paint according to claim 1, wherein the concentrated paint is combined with an adjusting paint separately prepared to adjust lightness to lower lightness.

3. The method for recycling aqueous intermediate-coating paint according to claim 2, wherein the adjusting paint has such a composition equal to a subtraction of the composition of the concentrated paint from the composition of the achromatic color intermediate-coating paint for re-using.

4. The method for recycling aqueous intermediate-coating paint according to claim 1, wherein the lightness of the concentrated paint is controlled by adjusting an operating amount of each achromatic color intermediate-coating aqueous paint.
